# EUROPÄISCHE PATENTSCHRIFT

(11) **EP 1 405 282 B1**
(45) Veröffentlichungstag und Bekanntmachung des Hinweises auf die Patenterteilung: **27.04.2011**
(21) Anmeldenummer: 02754856.9
(22) Anmeldetag: 09.07.2002
(51) Int. Cl.: G08C 17/02

(54) **VERBRAUCHSZÄHLER MIT EINER FUNKSENDEEINRICHTUNG ZUR FUNKÜBERTRAGUNG VON ZÄHLERSTANDSINFORMATIONEN**
CONSUMER METER COMPRISING A RADIO TRANSMISSION DEVICE FOR THE RADIO TRANSMISSION OF METER READING INFORMATION
COMPTEUR DE CONSOMMATION COMPRENANT UN DISPOSITIF EMETTEUR RADIO DESTINE A LA RADIOTRANSMISSION DE DONNEES RELATIVES A LA VALEUR AFFICHEE AU COMPTEUR

(30) Priorität: 10.07.2001 DE 10133367
(43) Veröffentlichungstag der Anmeldung: 07.04.2004
(73) Patentinhaber: Ziegler, Horst Prof. Dr., D-33100 Paderborn (DE)
(72) Erfinder: Ziegler, Horst Prof. Dr., D-33100 Paderborn (DE)
(74) Vertreter: Tiesmeyer, Johannes
(86) Internationale Anmeldenummer: PCT/EP2002/007645
(87) Internationale Veröffentlichungsnummer: WO 2003/007264

(56) Entgegenhaltungen:
- EP-A- 0 631 409
- WO-A-01/48490
- US-A- 4 477 809
- US-A- 5 748 104

## Beschreibung

Die Erfindung betrifft einen Verbrauchszähler mit einer Funksendeeinrichtung zur Funkübertragung von Zählerstandsinformationen zu einem mobilen oder stationären Funkempfänger gemäß dem Oberbegriff von Anspruch 1.

Ein derartiger Verbrauchszähler ist aus der EP 0 631 409 A bekannt.

Versorgungsunternehmen, etwa Energieversorgungsunternehmen oder Wasserversorgungsunternehmen, erstellen üblicherweise die Verbrauchsabrechnungen für ihre Kunden auf der Basis von Zählerstandsdaten von Verbrauchszählern, welche jeweiligen Medienverbrauchsstellen der Kunden zugeordnet und üblicherweise in der Nähe der Verbrauchsstellen installiert sind. Die Zählerstandsdaten geben jeweils für zurückliegende Verbrauchsperioden ein Maß für die verbrauchte Menge bzw. ein Maß für die Nutzung des betreffenden Mediums an der Verbrauchsstelle an. Verbrauchszähler können beispielsweise Gaszähler, Wasserzähler, Stromzähler, Wärmezähler, Heizkostenverteiler etc. sein.

Üblicherweise erfolgt die Erfassung der Zählerstandsdaten bzw. die Zählerablesung für ein Haus, eine Wohnung oder ggf. eine einzelne Verbrauchs stelle mindestens einmal jährlich. Für die Zählerstandsdaten-Erfassung sind derzeit verschiedene Verfahren im Einsatz. Bei herkömmlichen mechanischen Verbrauchszählern oder etwa Verdunstern für die Heizkostenerfassung wird der Zählerstand von einer jeweiligen Person abgelesen und auf einem Protokollbogen notiert oder ggf. mit Hilfe eines Datenerfassungsgerätes manuell erfasst. Ein Nachteil dieser konventionellen Methoden zur Zählerstandsdaten-Erfassung liegt darin, dass sie einen Zugang des Ablesepersonals zu den jeweiligen Verbrauchszählern und damit einen normalerweise mindestens jährlichen Zugang zu betreffenden Räumen eines Hauses bzw. einer Wohnung erfordern. Viele Bewohner empfinden eine solche manuelle Verbrauchszählerablesung in den Wohnungsräumen als störend. Ein Nachteil dieser konventionellen Methoden besteht auch darin, dass häufige Abwesenheit der Bewohner von ihren Wohnungen zu Problemen bei der Terminvereinbarung führt und damit einhergehend Mehrfachanfahrten des Ablesepersonals erforderlich macht.

Zur Vermeidung dieser Nachteile werden verschiedene Systeme zur Funkauslesung von Zählerstandsdaten eingesetzt, etwa solche Systeme, bei denen der Zählerstand vom Verbrauchszähler unidirektional in quasi zufälligen Zeitabständen (zur Vermeidung von Dauerkollisionen) zu einer Empfangsstation per Funk übertragen wird. Diese Verbrauchszähler weisen jeweils eine Funksendeeinrichtung auf, welche Zählerstandsdaten in Zuordnung zu Zähleridentifikationsdaten in einem jeweiligen Funktelegramm aussenden kann. Als Empfänger für diese Funktelegramme kommen stationäre Empfangsgeräte in Frage. Solch ein stationäres Empfangsgerät kann beispielsweise im Treppenhaus eines Wohnhauses installiert sein, um die Funktelegramme von Verbrauchszählern zu empfangen, welche in verschiedenen Wohnungen des Hauses installiert sind. Zur VerbrauchsdatenErfassung ist es in einem solchen Fall nicht mehr erforderlich, dass das Ablesepersonal die Wohnung betritt. Es reicht aus, wenn die Ableseperson Zutritt zu dem stationären Empfangsgerät im Treppenhaus des Hauses hat. In einer alternativen Variante des vorstehend angesprochenen Systems können die Funkempfangsgeräte untereinander drahtgebunden oder über ein weiteres Funkkommunikationssystem vernetzt sein, und in einer weiteren Stufe können die Zählerstandsdaten auch über stationäre, leitungsgebundene Standard-Modems oder über stationäre Funk-Modems an eine zentrale Datenerfassungsstelle übertragen werden, die die Zählerstände speichert und auswertet. Zum Stand der Technik wird diesbezüglich auf die EP 0 596 913 B1 verwiesen.

Ferner wird noch auf die US 5 748 104 A hingewiesen.

Es sind auch bereits Überlegungen darüber angestellt worden, die Funkauslesung von funkenden Verbrauchszählern mittels mobiler Funkempfangsgeräte durchzuführen, wobei die Ableseperson das Empfangsgerät in den Bereich der Sendereichweite der jeweiligen Funksendeeinrichtung zu bringen hat. Im Falle eines mehrstöckigen Wohngebäudes wird die Ableseperson somit den mobilen Funkempfänger im Treppenhausbereich durch ein oder mehrere Stockwerke des Wohngebäudes tragen, um von den betreffenden Verbrauchszählern die Zählerstandsinformationen in Zuordnung zu Zähleridentifikationsdaten per Funk zu empfangen.

Aus Kostengründen sind Verbrauchszähler zu bevorzugen, bei denen die Funksendeeinrichtungen die Zählerstandsinformationen und Identifikationsdaten unidirektional in quasi zufälligen Zeitabständen (zur Vermeidung von Dauerkollisionen von Funktelegrammen unterschiedlicher Herkunft) senden.

Bei Gebäuden mit wenigen funkenden Verbrauchszählern kann es aus Kostengründen vorteilhafter sein, die Datenerfassung mit mobilen Empfangsgeräten statt mit stationären Empfängern vorzunehmen, da dann solche stationären Empfänger von vornherein vermieden werden und deren Kosten daher eingespart werden können. Bei Gebäuden mit einer großen Anzahl von funkenden Verbrauchszählern spielen die Kosten eines oder einiger stationärer Funkempfänger dagegen eine verhältnismäßig geringe Rolle im Vergleich mit den Kosten der mobilen Funkauslesung. Bei den Kostenbetrachtungen spielt auch die Zahl der jährlich erforderlichen Ablesungen bzw. Zählerstandsdaten-Erfassungsvorgänge eine Rolle. Reicht eine jährliche Ablesung aus, wie dies etwa für die Heizkostenverteilung normalerweise der Fall ist, so ist die Zählerstandsdaten-Erfassung mittels mobiler Empfangsgeräte im Allgemeinen kostengünstiger als die Zählerstandsdaten-Erfassung mittels stationär installierter Empfangsgeräte. Sind dagegen häufiger Zählerstandsdaten-Erfassungsvorgänge erforderlich, etwa wegen Mieterwechsel oder wegen monatlicher Verbrauchsabrechnungen, so kann die Zählerstandsdaten-Erfassung mittels stationärer Empfangssysteme insbesondere in Verbindung mit einer vollautomatischen Datenfernübertragung der Zählerstandsinformationen zur Abrechnungszentrale die wirtschaftlichere Lösung darstellen. Aus den vorstehend genannten Gründen wird ein Versorgungsunternehmen oder ein Verbrauchsdatenabrechnungsunternehmen sowohl die stationäre Empfängervariante als auch die mobile Empfängervariante unterstützen müssen, um ein gesamtwirtschaftliches Optimum zu erreichen.

Die optimalen technischen Parameter der Hardware und der Software von funkenden Verbrauchszählern sind im Hinblick auf die Optimierung für den mobilen Datenempfang und im Hinblick auf den stationären Datenempfang deutlich unterschiedlich.

Funkende Verbrauchszähler für den Sendebetrieb zu mobilen Funkempfangsgeräten sollten eine möglichst hohe Sendehäufigkeit von beispielsweise einem Funktelegramm pro Minute aufweisen. Ist die Sendehäufigkeit wesentlich geringer, so hat die mit dem mobilen Sendegerät ausgerüstete Ableseperson im statistischen Mittel zu lange auf den Empfang eines Funktelegramms eines betreffenden Verbrauchszählers zu warten, so dass insgesamt vergleichsweise hohe Personalkosten entstehen. Ist die Sendehäufigkeit sehr groß und somit der Zeitabstand zwischen zwei Funktelegrammen sehr klein, so kommt es in Häusern mit vielen Verbrauchszählern zu einer zu hohen Belegung des Funkkanals und daher zu sehr vielen Kollisionen von Funktelegrammen, so dass ein zuverlässiger Empfang dann nicht mehr möglich ist. Eine große Sendehäufigkeit der Funktelegramme bedeutet auch einen relativ hohen mittleren Strombedarf der Funksendeeinrichtung, was jedoch vermieden werden sollte, da es sich bei den hier betrachteten Verbrauchszählern vorzugsweise um batteriebetriebene Geräte handelt und erhöhter Strombedarf zu einer zu schnellen Batterieentladung führt.

Bei einem System mit einem stationären Funkempfänger genügt eine relativ geringe Sendehäufigkeit der Funktelegramme der Verbrauchszähler, um eine zuverlässige Verbrauchsdatenerfassung sicherzustellen.

Auch bezüglich der Sendeleistungen bestehen Unterschiede zwischen einem Verbrauchszähler für stationäre Funkauslesung und einem Verbrauchszähler für mobile Funkauslesung . Bei der stationären Funkauslesung kann es durch Interferenzen aufgrund von Mehrwege-Funkausbreitung dazu kommen, dass bestimmte Funkverbindungen zwischen Verbrauchszählern und stationären Empfängern auch bei einem räumlichen Abstand von nur wenigen Metern zu schwach für eine ungestörte Übertragung sind. Um eine solche Situation zu vermeiden, sollte eine hinreichend große Sendeleistung bei Systemen für stationären Empfang vorgesehen werden.

Bei einem funkenden Verbrauchszähler für die mobile Funkauslesung durchschreitet die Ableseperson mit dem mobilen Funkempfangsgerät dagegen unwillkürlich solche (im Bereich von 10 cm) eng lokalisierten Interferenzfunklöcher schnell, so dass derartige räumliche Bereiche schwachen Empfangs für die funktechnische Auslegung der Funksendeeinrichtungen nur eine vergleichsweise geringe Rolle spielen. Bei Systemen mit mobiler Funkauslesung ist daher deutlich weniger Sendeleistung erforderlich als bei Systemen mit stationärer Funkauslesung, wobei im Wesentlichen gleiche Empfindlichkeit der Funkempfänger vorausgesetzt wird.

Die Unterschiede zwischen den Anforderungen an die Sendeleistung bei Systemen mit stationärem Empfang und bei Systemen mit mobilem Empfang sind auch noch dadurch begründet, dass bei Systemen mit stationärem Empfang in einem mehrstöckigen Wohngebäude möglichst mehrere Stockwerke überbrückt werden sollen, um die Zahl und damit die Kosten der stationären Funkempfänger zu minimieren, wohingegen bei Systemen mit mobilem Empfang oft eine Funkreichweite nur innerhalb desselben Stockwerkes ausreicht, da die Ableseperson mit dem Funkempfangsgerät ohnehin im Bereich des Treppenhauses jedes Stockwerk begeht und dabei die Funktelegramme der jeweiligen Stockwerke mit dem Empfangsgerät empfangen kann.

Da die Empfangsempfindlichkeit moderner mobiler und stationärer Empfänger nahezu gleich groß sind und im Wesentlichen nahe der durch das thermische Rauschen bestimmten Grenzempfindlichkeit liegt, sind für funkende Verbrauchszähler für die stationäre Auslesung insgesamt höhere Sendeleistungen erforderlich als für die mobile Funkauslesung.

Auch in den Anforderungen an die Funktelegramminhalte bestehen Unterschiede zwischen den Systemen für stationäre Funkauslesung und den Systemen für mobile Funkauslesung. Bei stationärer Funkauslesung genügt üblicherweise die Übertragung der jeweils aktuellen Zählerstandsinformation und der Zählernummer. Der stationäre Funkempfänger kann dann die empfangenen Werte und den jeweiligen Empfangszeitpunkt speichern. Dadurch lässt sich für eine spätere Abrechnung nicht nur der aktuelle Zählerstand, sondern auch der Zählerstand zu bestimmten Zeitpunkten, insbesondere den Abrechnungs-Stichtagen, rekonstruieren und damit selbst bei einem erst bei der Abrechnungserstellung bekannt gewordenen früheren Mieterwechsel einer betreffenden Wohnung noch nachträglich eine korrekte Abrechnung erstellen. Eine solche Zählerzwischenstandsspeicherung kann in den stationären Funkempfängern oder - bei regelmäßiger Direktübertragung zur Abrechnungszentrale - auch in der Abrechnungszentrale erfolgen.

Bei Systemen für mobile Funkauslesung ist es zweckmäßig, die Verbrauchszähler so auszulegen, dass sie selbst solche Zählerzwischenstände zu vorgebbaren Zeiten speichern und per Funk in betreffenden Funktelegrammen senden, damit auch bei einer kostengünstigen seltenen, z.B. nur jährlichen Funkauslesetour die Zählerstandsinformationen aus der Vergangenheit zur Verfügung stehen, so dass bei den Verbrauchsabrechnungen auch Tarifänderungen, zwischenzeitlichen Wohnungsinhaberwechsel usw. berücksichtigt werden können. Daher kann es sinnvoll sein, dass die Funktelegramme für die mobile Funkauslesung deutlich mehr Daten enthalten als Funktelegramme für die stationäre Funkauslesung.

Die vorstehend dargelegten Vergleichsbetrachtungen zeigen daher, dass ein für die mobile Funkauslesung optimierter funkender Verbrauchszähler im Vergleich mit einem für die stationäre Funkauslesung optimierten Verbrauchszähler dazu eingerichtet sein sollte, längere Funktelegramme mit größerer Sendehäufigkeit auszusenden, wobei jedoch eine vergleichsweise kleine Sendeleistung genügt. Insgesamt ist daher trotz größerer Funktelegrammlänge und höherer Sendehäufigkeit wegen der kleinen Sendeleistung eine kleine Batterie bzw. zur Pufferung ein kleiner Kondensator ausreichend.

Ein für die stationäre Funkauslesung optimierter funkender Verbrauchszähler sollte dagegen vergleichsweise selten kurze Funktelegramme aussenden, wobei jedoch eine möglichst hohe Sendeleistung erforderlich ist. Trotz dieser hohen Sendeleistung ist aber wegen der geringen Sendehäufigkeit und der kurzen Funktelegramme auch hier eine kleine Batterie bzw. zur Pufferung ein kleiner Kondensator ausreichend.

Zusammenfassend kann man also feststellen, dass funkende Verbrauchszähler für die mobile Funkauslesung und funkende Verbrauchszähler für die stationäre Funkauslesung deutliche Unterschiede in den Anforderungen an die Funktelegrammlänge, Sendehäufigkeit und Sendeleistungen aufweisen, aber jeweils mit einer Batterie akzeptabler Größe und mit einem kleinen Pufferkondensator auskommen können.

Aufgabe der vorliegenden Erfindung ist es, einen Verbrauchszählertyp als Basis für ein ein rationelles System für Verbrauchsdatenerfassung bereitzustellen.

Zur Lösung dieser Aufgabe wird ein Verbrauchszähler mit einer Funksendeeinrichtung zur Funkübertragung von Zählerstandsinformationen zu einem mobilen oder stationären Funkempfänger gemäß Anspruch 1 vorgeschlagen.

Der Erfindung liegt die Idee zugrunde, einen universell einsetzbaren funkenden Verbrauchszähler vorzusehen, der dazu vorbereitet ist, dass er in wenigstens zwei unterschiedlichen Sendebetriebsarten senden kann, nämlich in einer ersten Sendebetriebsart, in der er Funktelegramme aussendet, die in Telegrammaufbau und Sendehäufigkeit für den mobilen Funkempfang (mobile Funkauslesung) optimiert sind, und in einer zweiten Sendebetriebsart, in der er Funktelegramme aussendet, die in Telegrammaufbau und Sendehäufigkeit für den Empfang mit stationären Funkempfängern (stationäre Funkauslesung) optimiert sind.

Dabei sollte der Verbrauchszähler in der Sendebetriebsart für stationäre Funkauslesung aus oben genannten Gründen eine Sendeleistung aufweisen, die um wenigstens 3 Dezibel größer ist als die Sendeleistung in der Sendebetriebsart für die mobile Funkauslesung. Die Funktelegramme können sich also zusätzlich in der Sendeleistung unterscheiden.

Zweckmäßigerweise sollte der Verbrauchszähler in der Funkbetriebsart für die mobile Funkauslesung aus den oben genannten Gründen eine Sendehäufigkeit der Funktelegramme aufweisen, die um wenigstens 30 % größer ist als die Sendehäufigkeit in der Sendebetriebsart für die stationäre Funkauslesung.

Vorzugsweise erzeugt und sendet der Verbrauchszähler in der Sendebetriebsart für mobile Funkauslesung Funktelegramme, die um wenigstens 30 % länger sind als die Funktelegramme in der Sendebetriebsart für stationäre Funkauslesung. Erfindungsgemäß ist die größere Funktelegrammlänge, d.h. größere Datenmenge, dadurch begründet, dass Zählerstandsinformationen aus zurückliegenden Zeitpunkten zusätzlich zu den aktuellen Zählerstandsinformationen in den Funktelegrammen enthalten sind.

Wenngleich es im Rahmen der Erfindung vorgesehen sein kann, dass die betreffende Sendebetriebsart eines erfindungsgemäßen Verbrauchsżählers bei dessen Inbetriebnahme oder bei der Montage oder ggf. auch noch nachträglich, insbesondere durch Software-Parametrierung voreingestellt wird, ist jedoch eine Variante bevorzugt, gemäß welcher der erfindungsgemäße Verbrauchszähler vollautomatisch z.B. unter der Kontrolle eines Mikroprozessors beide Sendebetriebsarten im Wechsel durchführt, so dass derselbe Zähler im periodischen oder im nicht periodischen, quasi statistischen Wechsel mit vorgebbarer relativer Häufigkeit Funktelegramme für stationäre Funkauslesung und Funktelegramme für mobile Funkauslesung sendet. Eine solche Multifunktionalität ist kostengünstig möglich, da beide Sendestrukturen aus den oben erläuterten unterschiedlichen Gründen mit einer kleinen Batterie und erforderlichenfalls auch mit einem kleinen Pufferkondensator auskommen.

Die unterschiedlichen Funktelegrammtypen und Funktelegrammlängen sowie die unterschiedlichen Sendehäufigkeiten lassen sich bei einer bevorzugten Ausführungsform der Erfindung rein softwaretechnisch realisieren. Die unterschiedlichen Sendeleistungen können mittels einer steuerbaren Sendeendstufe der Funksendeeinrichtung erzeugt werden, wobei der Verbrauchszähler dazu eingerichtet ist, die Sendeendstufe so zu steuern, dass die Funktelegramme eines jeweiligen Funktelegrammtyps mit einer dem Funktelegrammtyp zugeordneten Sendeleistung gesendet werden. Gemäß einer anderen Ausführungsform eines Verbrauchszählers nach der Erfindung weist die Funksendeeinrichtung eine Leistungsverstärker-Endstufe und eine Treiberstufe für die Leistungsverstärker-Endstufe auf. Der Verbrauchszähler ist dazu eingerichtet, Funktelegramme für mobile Funkauslesung nur über die Treiberstufe zu senden und Funktelegramme für stationäre Funkauslesung über die Leistungsverstärker-Endstufe zu senden.

Zur Vermeidung von systematischen und wiederholten Funkkollisionen sollte der Verbrauchszähler nach der Erfindung dazu eingerichtet sein, die Funktelegramme in stochastischen oder pseudostochastischen Zeitabständen auszusenden. Auch kann es vorgesehen sein, dass der mittlere Zeitabstand der Funktelegramme in einer vorgegebenen Zeitstruktur, beispielsweise täglich, wöchentlich, monatlich, variiert wird.

Das erfindungsgemäße Konzept, Verbrauchszähler derselben Bauart bereitzustellen, die energiesparend sowohl in einer Betriebsart für mobile Funkauslesung als auch in einer Betriebsart für stationäre Funkauslesung betrieben werden können, bietet erhebliche logistische und wirtschaftliche Vorteile.

Hinzuweisen ist auch auf die Flexibilität eines Verbrauchsdaten-Erfassungssystems mit Verbrauchszählern nach der Erfindung. So ist es ohne weiteres möglich, bei Bedarf zwischen der Methode der mobilen Auslesung und der Methode der stationären Funkauslesung zu wechseln, um die Verbrauchsdaten-Erfassung durchzuführen.

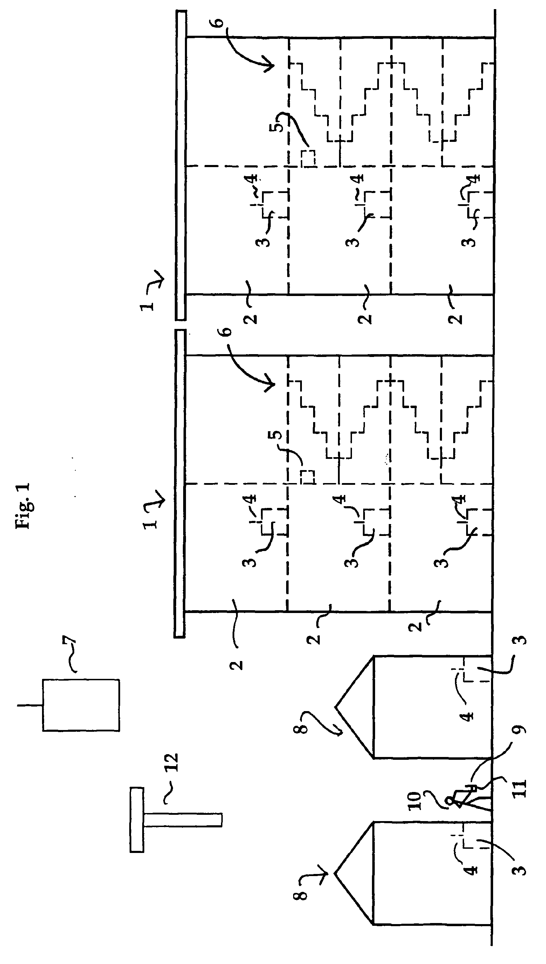

Die Erfindung wird nachstehend anhand der Figur 1 näher erläutert.

Mit 1 sind in Fig. 1 zwei mehrstöckige Wohnhäuser bezeichnet, welche beispielsweise zu einem Siedlungsgebiet mit weiteren (nicht gezeigten) mehrstöckigen Wohngebäuden gehören. In jeder der Wohnungen 2 der Häuser 1 ist mindestens ein jeweiliger Verbrauchszähler 3, beispielsweise ein Heizkostenverteiler oder ein Wasserzähler, vorgesehen, welcher zur Erfassung des Wärmeverbrauchs bzw. des Wasserverbrauchs in der betreffenden Wohnung dient und mit einer Funksendeeinrichtung 4 ausgestattet ist. Mittels der Funksendeeinrichtung 4 sendet der Verbrauchszähler 3 Zählerstandsinformationen in Zuordnung zu Zähleridentifikationsdaten (Zählernummer) zu einem stationären Funkempfangsgerät 5. Im Beispielsfall ist das stationäre Funkempfangsgerät 5 im Treppenhaus 6 in einer mittleren Etage installiert, so dass es im Bereich der Funkreichweite sämtlicher Funksendeeinrichtungen 4 des betreffenden Hauses 1 vorgesehen ist.

Die Funkempfangsgeräte 5 sind mit einem jeweiligen Funkmodem (nicht gezeigt) verbunden und dazu eingerichtet, über das Funkmodem Zählerstandsdaten in Zuordnung zu den Zähleridentifikationsdaten zu einer zentralen Abrechnungsstelle 7 zu übertragen. In der zentralen Abrechnungsstelle 7 ist eine Computeranlage installiert, welche die empfangenen Daten speichert, um sie zum Zwecke der Erstellung von Verbrauchsabrechnungen usw. auszuwerten.

Da bei den mehrgeschossigen Wohnhäusern 1 ein Empfangsgerät 5 mehreren, vorzugsweise allen funkenden Verbrauchszählern 3 zugeordnet werden kann, sind in einem solchen Fall die Anschaffungs- und Installationskosten für die stationären Empfangsgeräte 5 bei gesamtwirtschaftlicher Betrachtung durchaus akzeptabel, da die Verbrauchsdatenerfassung bei den Häusern 1 kein Auslesepersonal erfordert und somit Personalkosten eingespart werden können.

Anders kann die Situation z.B. im Fall eines Siedlungsgebietes mit Einfamilienhäusern 8 sein, von denen jedes einen Verbrauchszähler 3 (Heizkostenverteiler oder Wasserzähler) mit Funksendeeinrichtung 4 aufweist. Wollte man im Falle der Häuser 8 ebenso wie im Falle der Häuser 1 mit stationären Funkempfangsgeräten 5 die Funkauslesung der Verbrauchszähler 3 betreiben, so wäre pro Haus 8 ein Empfangsgerät 5 erforderlich, da aufgrund der begrenzten Funkreichweiten der Funksendeeinrichtungen 4 ein gemeinsames Funkempfangsgerät für mehrere Verbrauchszähler 3 nicht in Frage käme. In einer solchen Situation kann es wirtschaftlicher sein, die Funkauslesung der Zähler 3 mit einem mobilen Funkempfangsgerät 9 durchzuführen, welches von einer bei 10 angedeuteten Ausleseperson jeweils in den Bereich der Funksendereichweite der Funksendeeinrichtung 4 des zur Auslesung anstehenden Verbrauchszählers 3 zu bringen ist. Das mobile Funkempfangsgerät 9 kann gemäß einer Variante mit einer Datenspeichereinrichtung (Massenspeicher) für die Speicherung der per Funk empfangenen Zählerstandsdaten und Zähleridentifikationsdaten ausgestattet sein. Die Speicherauslesung kann dann nach Durchführung einer Verbrauchsdatenerfassungstour in einer Abrechnungszentrale oder ggf. per Datenfernübertragung zur Zentrale 7 erfolgen. Im bevorzugten Beispielsfall der Fig. 1 ist das mobile Funkempfangsgerät 9 mit einem Endgerät 11 eines WAN-Mobilfunksystems zu einer Geräteeinheit kombiniert. Dieses Endgerät 11 kann ein Funktelefon und/oder ein Funkmodem, insbesondere nach einem der folgenden Standards sein: GFM, SMS, GPRS, UMTS, TETRA.

Die Gerätekombination aus Funkempfangsgerät 9 und Endgerät 11 ist dazu eingerichtet, die per Funk zwischen einer Funksendeeinrichtung 4 und dem Empfangsgerät 9 übertragenen Zählerstandsinformationen und Zähleridentifikationsdaten möglichst bald nach dem Empfang über das Mobilfunksystem an die Abrechnungszentrale 7 weiterzuleiten. Mit 12 ist in Fig. 1 eine (von normalerweise mehreren) Basisstationen des Mobilfunksystems bezeichnet. Die Abrechnungszentrale 7 kann über das Mobilfunksystem Rückmeldungen an die Ausleseperson 10 veranlassen, etwa um auf Verbrauchszähler 3 hinzuweisen, die bei der Datenerfassungstour der Ausleseperson 10 versehentlich ausgelassen wurden. Einzelheiten zu einer solchen Methode der mobilen Erfassung von Zählerstandsinformationen sind der am Prioritätstag/Anmeldetag der vorliegenden Anmeldung vom selben Anmelder eingereichten deutschen Patentanmeldung mit dem Titel "Verfahren zur Erfassung von Zählerstandsdaten und Verbrauchsdaten-Erfassungssystem" zu entnehmen. Der Inhalt der Anmeldung "Verfahren zur Erfassung von Zählerstandsdaten und Verbrauchsdaten-Erfassungssystem" wird in den Offenbarungsgehalt der vorliegenden Anmeldung durch Bezugnahme einbezogen.

Im Beispielsfall der Figur 1 sind die Verbrauchszähler 3 sämtlich gleicher Bauart und werden aus zugehörigen Batterien elektrisch versorgt.

Erfindungsgemäß ist jeder der Verbrauchszähler 3 dazu vorbereitet und eingerichtet, zeitweise in einem für den Empfang mit stationären Funkempfangsgeräten 5 optimierten Sendebetrieb und zeitweise in einem für den Empfang mit einem mobilen Empfangsgerät 9 optimierten Sendebetrieb zu senden. Die Zeitpunkte der Wechsel von der einen Sendebetriebsart zur anderen Sendebetriebsart und die Zeitpunkte der jeweiligen Telegrammaussendungen werden unter Kontrolle eines Mikroprozessors des Zählers 3 bestimmt.

Wie bereits eingangs näher erläutert, unterscheiden sich diese Sendebetriebsarten insbesondere hinsichtlich der Sendereichweite und der Sendehäufigkeit der betreffenden Funktelegramme und ggf. auch hinsichtlich der Telegrammaufbauten und Telegrammlängen der Funktelegramme. Mit anderen Worten bedeutet dies, dass die in den mehrgeschossigen Wohngebäuden 1 vorgesehenen funkenden Verbrauchszähler 3 jeweils in größeren stochastischen oder quasi stochastischen Zeitabständen Funktelegramme für den Empfang durch das zugeordnete stationäre Empfangsgerät 5 senden, wobei zwischen den Funktelegrammen für den stationären Empfang Funktelegramme mit größerer Sendehäufigkeit und geringerer Funkreichweite gesendet werden, die für den Empfang mit einem mobilen Empfangsgerät 9 optimiert sind. Normalerweise werden die Funktelegramme für mobilen Empfang bei der Zählerstandsdatenerfassung der Verbrauchszähler 3 der Häuser 1 nicht genutzt.

Anders ist es bei der Zählerstandsdatenerfassung der Verbrauchszähler 3 der Häuser 8. Bei den Häusern 8 erfolgt die Zählerstandsdatenerfassung durch Empfang der für mobilen Empfang optimierten Funktelegramme der betreffenden Verbrauchszähler 3. Die von diesen Zählern 3 auch ausgesendeten Funktelegramme für stationären Empfang werden bei der Verbrauchsdatenerfassung der Verbrauchszähler 3 in den Häusern 8 nicht genutzt.

Sollte es vorkommen, dass von einem Verbrauchszähler 3 in einem Haus 1 kein Funktelegramm von dem zugeordneten stationären Empfangsgerät 5 empfangen wird, so besteht die Möglichkeit, die mobile Gerätekombination aus Empfangsgerät 9 und Mobilfunk-Endgerät 11 in den Bereich der Funkreichweite des betreffenden Zählers zu bringen, um so die Zählerstandsinformationen auszulesen.

Allgemein wäre es möglich, sämtliche Verbrauchszähler 3 mit dem mobilen Funkempfangsgerät 9 auszulesen. Andererseits besteht die Möglichkeit, stationäre Empfänger 5 auch in den Häusern 8 nachträglich einzubauen, um auf stationäre Funkauslesung überzugehen, etwa weil die Anschaffungs- und Installationskosten für stationäre Funkempfänger 5 im Verhältnis zu den Personalkosten bei der mobilen Funkauslesung so weit gesunken sind, dass die stationäre Funkauslesung auch bei den Häusern 8 wirtschaftlich geworden ist. An den Verbrauchszählern 3 muss bei einem solchen Wechsel der Empfangsart nichts geändert werden.

Zusammenfassend kann die Erfindung unter einem Aspekt wie folgt skizziert werden. Sie betrifft einen Verbrauchszähler mit einer Funksendeeinrichtung zur Funkübertragung von Zählerstandsinformationen zu einem betreffenden Funkempfänger 5 bzw. 9, wobei der Verbrauchszähler dadurch gekennzeichnet ist, dass die Funksendeeinrichtung 4 zum Senden von Funktelegrammen wenigstens zweier unterschiedlicher Funktelegrammtypen vorbereitet ist, wobei sich die Funktelegrammtypen in der Sendeleistung oder/und in der Sendehäufigkeit oder/und in der Funktelegrammlänge bei der Funktelegrammaussendung unterscheiden. Ein Funktelegrammtyp ist für den Empfang mittels stationärer Empfangsgeräte 5 optimiert, wohingegen der andere Funktelegrammtyp für den Empfang mittels mobiler Empfangsgeräte 9 optimiert ist.

## Patentansprüche

1. Verbrauchszähler (3) mit einer Funksendeeinrichtung (4) zur Funkübertragung von Zählerstandsinformationen zu einem mobilen oder stationären Funkempfänger (5; 9), wobei die Funksendeeinrichtung (4) zum Senden von Zählerstandsinformationen enthaltenden Funktelegrammen wenigstens zweier sich in der Sendehäufigkeit unterscheidender Funktelegrammtypen eingerichtet ist, wobei der Verbrauchszähler (3) ferner dazu eingerichtet ist, dass er in wenigstens zwei unterschiedlichen Sendebetriebsarten sendet, nämlich in einer ersten Sendebetriebsart, in der er Funktelegramme für den Empfang mit mobilen Funkempfängern aussendet, und in einer zweiten Sendebetriebsart, in der er Funktelegramme für den Empfang mit stationären Funkempfängern aussendet, wobei vollautomatisch beide Sendebetriebsarten im Wechsel durchgeführt werden, so dass der Verbrauchszähler (3) im periodischen oder im nicht periodischen Wechsel mit vorgebbarer relativer Häufigkeit Zählerstandsdaten enthaltende Funktelegramme für stationäre Funkauslesung und Zählerstandsdaten enthaltende Funktelegramme für mobile Funkauslesung sendet, **dadurch gekennzeichnet, dass** sich die Funktelegrammtypen ferner in der Funktelegrammlänge bei der Funktelegrammaussendung unterscheiden, wobei, bei größerer Funktelegrammlänge, in der Sendebetriebsart für mobile Funkauslesung Zählerstandsinformationen aus zurückliegenden Zeitpunkten zusätzlich zu aktuellen Zählerstandsinformationen im betreffenden Funktelegramm enthalten sind.

2. Verbrauchszähler nach Anspruch 1, **dadurch gekennzeichnet, dass** sich die Funktelegrammtypen ferner in der Sendeleistung unterscheiden.

3. Verbrauchszähler nach Anspruch 2, **dadurch gekennzeichnet, dass** sich die Funktelegrammtypen in der Sendeleistung um wenigstens 3 Dezibel unterscheiden.

4. Verbrauchszähler nach einem der vorhergehenden Ansprüche, **dadurch gekennzeichnet, dass** die Funksendeeinrichtung eine hinsichtlich der Sendeleistung steuerbare Sendeendstufe aufweist und dass der Verbrauchszähler dazu eingerichtet ist, die Sendeendstufe so zu steuern, dass die Funktelegramme eines jeweiligen Funktelegrammtyps mit einer dem Funktelegrammtyp zugeordneten Sendeleistung gesendet werden.

5. Verbrauchszähler nach einem der vorhergehenden Ansprüche, **dadurch gekennzeichnet, dass** die Funksendeeinrichtung eine Leistungsverstärker-Endstufe und eine Treiberstufe für die Leistungsverstärker-Endstufe aufweist und dazu eingerichtet ist, Funktelegramme eines ersten Funktelegrammtyps bei nicht aktivierter Leistungsverstärker-Endstufe nur über die Treiberstufe zu senden und Funktelegramme eines zweiten Funktelegrammtyps über die Leistungsverstärker-Endstufe zu senden.

6. Verbrauchszähler nach einem der vorhergehenden Ansprüche, **dadurch gekennzeichnet, dass** sich die Funktelegrammtypen in ihrer mittleren Sendehäufigkeit um wenigstens 30 % - bezogen auf die kleinere mittlere Sendehäufigkeit - unterscheiden.

7. Verbrauchszähler nach einem der vorhergehenden Ansprüche, **dadurch gekennzeichnet, dass** sich die Funktelegrammtypen in der Funktelegrammlänge um wenigstens 30% - bezogen auf die kleinere Telegrammlänge - unterscheiden.

8. Verbrauchszähler nach einem der vorhergehenden Ansprüche, **dadurch gekennzeichnet, dass** die Funksendeeinrichtung (4) dazu eingerichtet ist, die Funktelegramme in stochastischen oder pseudostochastischen Zeitabständen auszusenden.

9. Verbrauchszähler nach einem der vorhergehenden Ansprüche, **dadurch gekennzeichnet, dass** die Funksendeeinrichtung (4) dazu eingerichtet ist, den mittleren Zeitabstand der Funktelegramme in einer vorgegebenen Zeitstruktur zu variieren.

## Claims

1. A consumption meter (3) with a radio transmitter device (4) for the radio transmission of meter reading information to a mobile or stationary radio receiver (5;9), wherein the radio transmitter device (4) is set up to send radio messages containing meter reading information of at least two radio message types differing in transmission frequency, wherein the consumption meter (3) is also set up to transmit in at least two different transmission modes, namely in a first transmission mode in which it emits radio messages for reception with portable radio receivers, and in a second transmission mode in which it emits radio messages for reception with stationary radio receivers, wherein in a fully automatic manner both transmission modes are carried out alternately so that in periodic and non-periodic alternation with predeterminable relative frequency the consumption meter (3) transmits radio messages containing meter reading data for stationary radio read-out and radio messages containing meter reading data for mobile radio read-out, **characterised in that** during radio message emission the radio message types also differ in radio message length, wherein with greater radio message length, in the transmission mode for mobile radio read-out, meter reading information from previous instances is contained in the relevant radio message in addition to current meter reading information.

2. A consumption meter according to Claim 1, **characterised in that** the radio message types also differ in transmitting power.

3. A consumption meter according to Claim 2, **characterised in that** the radio message types also differ in transmitting power by at least 3 decibels.

4. A consumption meter according to any one of the preceding Claims, **characterised in that** the radio transmitter device has a transmitter end stage which can be controlled with respect to transmitting power, and **in that** the consumption meter is set up to control the transmitter end stage so that the radio messages of a respective radio message type are transmitted at a transmitting power associated with the radio message type.

5. A consumption meter according to any one of the preceding Claims, **characterised in that** the radio transmitter device has a power amplifier end stage and a driver stage for the power amplifier end stage and is set up to transmit radio messages of a first radio message type only via the driver stage with the power amplifier end stage inoperative and to transmit radio messages of a second radio message type via the power amplifier end stage.

6. A consumption meter according to any one of the preceding Claims, **characterised in that** the radio message types differ in their average transmission frequency by at least 30 % - relation to the lower average transmission frequency.

7. A consumption meter according to any one of the preceding Claims, **characterised in that** the radio message types differ in radio message length by at least 30 % - relation to the smaller radio message length.

8. A consumption meter according to any one of the preceding Claims, **characterised in that** the radio transmitter device (4) is set up to emit the radio messages in stochastic or pseudostochastic time intervals.

9. A consumption meter according to any one of the preceding Claims, **characterised in that** the radio transmitter device (4) is set up to vary the average time interval of the radio messages within a predetermined time structure.

## Revendications

1. Compteur de consommation (3) doté d'un dispositif émetteur radioélectrique (4) destiné à la transmission radioélectrique d'informations d'état de compteur à un récepteur radioélectrique mobile ou stationnaire (5 ; 9), le dispositif émetteur radioélectrique (4) étant agencé pour émettre des radiotélégrammes, contenant des informations d'état de compteur, d'au moins deux types de radiotélégrammes se différenciant par la fréquence de leurs émissions, le compteur de consommation (3) étant en outre agencé pour émettre dans au moins deux modes d'émission différents, à savoir dans un premier mode d'émission dans lequel il émet des radiotélégrammes pour la réception par le récepteur radioélectrique mobile, et dans un deuxième mode d'émission dans lequel il émet des radiotélégrammes pour la réception par le récepteur radioélectrique stationnaire, les deux modes d'émission étant exécutés entièrement automatiquement en alternance de sorte que le compteur de consommation (3) émette, en alternance périodique ou non périodique avec une fréquence relative prédéfinie, des radiotélégrammes contenant des données d'état de compteur pour la lecture radioélectrique stationnaire et des radiotélégrammes contenant des données d'état de compteur pour la lecture radioélectrique mobile, **caractérisé en ce que** les types de radiotélégrammes se différencient en outre par la longueur des radiotélégrammes lors de l'émission des radiotélégrammes, sachant que dans le mode d'émission pour la lecture radioélectrique mobile, pour des longueurs de radiotélégramme plus grandes, des informations d'état de compteur provenant d'instants antérieurs sont contenues dans le radiotélégramme concerné en plus des actuelles informations d'état de compteur.

2. Compteur de consommation selon la revendication 1, **caractérisé en ce que** les types de radiotélégrammes se différencient par la puissance d'émission.

3. Compteur de consommation selon la revendication 2, **caractérisé en ce que** les types de radiotélégrammes se différencient par une différence de la puissance d'émission d'au moins 3 décibels.

4. Compteur de consommation selon l'une quelconque des revendications précédentes, **caractérisé en ce que** le dispositif émetteur radioélectrique comporte un étage final d'émission pouvant être commandé en ce qui concerne la puissance d'émission et **en ce que** le compteur de consommation est agencé pour commander l'étage final d'émission de sorte que les radiotélégrammes d'un type respectif de radiotélégramme soient émis avec une puissance d'émission attribuée au type de radiotélégramme.

5. Compteur de consommation selon l'une quelconque des revendications précédentes, **caractérisé en ce que** le dispositif émetteur radioélectrique comporte un étage final d'amplificateur de puissance et un étage d'excitation destiné à l'étage final amplificateur de puissance et est agencé pour envoyer des radiotélégrammes d'un premier type de radiotélégramme uniquement par le biais de l'étage d'excitation lorsque l'étage final amplificateur de puissance n'est pas activé et pour envoyer des radiotélégrammes d'un deuxième type de radiotélégramme par le biais de l'étage final amplificateur de puissance.

6. Compteur de consommation selon l'une quelconque des revendications précédentes, **caractérisé en ce que** les types de radiotélégrammes se différencient dans la fréquence moyenne de leurs émissions d'au moins 30 % - par rapport à la plus petite fréquence moyenne des émissions.

7. Compteur de consommation selon l'une quelconque des revendications précédentes, **caractérisé en ce que** les types de radiotélégrammes se différencient dans la longueur des radiotélégrammes d'au moins 30 % - par rapport à la plus petite des longueurs des télégrammes.

8. Compteur de consommation selon l'une quelconque des revendications précédentes, **caractérisé en ce que** le dispositif émetteur radioélectrique (4) est agencé pour émettre les radiotélégrammes à des intervalles de temps stochastiques ou pseudo-stochastiques.

9. Compteur de consommation selon l'une quelconque des revendications précédentes, **caractérisé en ce que** le dispositif émetteur radioélectrique (4) est agencé pour varier l'intervalle de temps moyen des radiotélégrammes dans une structure temporelle prédéfinie.
